Europäisches Patentamt

**European Patent Office**

Office européen des brevets

(11) Numéro de publication: **0 279 733**
**A1**

(12) **DEMANDE DE BREVET EUROPEEN**

(21) Numéro de dépôt: 88400272.6

(22) Date de dépôt: 05.02.88

(51) Int. Cl.⁴: **G 06 F 1/00**

(30) Priorité: 05.02.87 FR 8701423

(43) Date de publication de la demande:
24.08.88 Bulletin 88/34

(84) Etats contractants désignés: **DE ES FR IT**

(71) Demandeur: **MICROPHAR, Sàrl dite:**
**15 rue d'Armenonville**
**F-92200 Nueilly Sur Seine** (FR)

(72) Inventeur: **Parent, Jacques**
**16 avenue Ste Foy**
**F-92200 Neuilly sur Seine** (FR)

(74) Mandataire: **Pinguet, André**
**CAPRI 28 bis, avenue Mozart**
**F-75016 Paris** (FR)

Une requête en rectification de la numérotation des revendications (Dernière revendication aurait dû porter le numero 8 ou lieu du numero 9) a été présentée conformément à la règle 88 CBE. Il est statué sur cette requête au cours de la procedure engagée devant la division d'examen (Directives relatives à l'examen pratiqué à l'OEB, A-V, 2.2).

(54) **Procédé et dispositif de limitation de l'exploitation d'un logiciel.**

(57) Un dispositif de limitation de l'exploitation d'un logiciel par un ordinateur destiné à être connecté à certaines des bornes périphériques de l'interface d'un ordinateur avec un appareil périphérique qu'il commande, ledit logiciel ne pouvant être exploité normalement que si ledit dispositif est connecté à ladite interface, comprend un circuit diviseur jouant le rôle d'un compteur binaire destiné à compter des impulsions d'horloge en provenance dudit ordinateur, et les connections dudit circuit diviseur avec ladite interface sont organisées comme suit:

- l'entrée dudit circuit diviseur est reliée à une des bornes de ladite interface;

- seules certaines des sorties dudit circuit diviseur sont connectées à une autre des bornes de ladite interface, par l'intermédiaire d'une première porte logique (15);

- ledit circuit diviseur est alimenté en énergie par l'une des bornes de ladite interface.

Fig. 3

EP 0 279 733 A1

# Description

## PROCEDE ET DISPOSITIF DE LIMITATION DE L'EXPLOITATION D'UN LOGICIEL

La présente invention a trait à un procédé et dispositif de limitation de l'exploitation de tout ou partie d'un logiciel pour ordinateur par une personne non autorisee.

Le terme "ordinateur" s'applique essentiellement ici aux micro-ordinateurs voire aux mini-ordinateurs.

On connaît des procédés visant à empêcher une personne non autorisée d'utiliser un logiciel. Certains consistent à insérer dans le logiciel des instructions pour demander à l'utilisateur d'entrer un code ou un mot de passe que lui seul est supposé connaître, mais il est alors assez facile de se procurer le code ou le mot de passe et de se servir de copies du logiciel. D'autres vérifient la présence d'un numéro interne et propre à la machine. Ces numéros n'existent pas dans les micro-ordinateurs pour des raisons de fabrication en grande série. D'autres instructions peuvent être intégrées au logiciel en vue de rendre difficile sa copie, mais il existe à l'heure actuelle des programmes de copie très puissants. D'autre part, si un logiciel est très bien protégé contre la copie, l'utilisateur ne peut pas se faire des copies de sauvegarde de son logiciel.

Ces procédés de l'art antérieur ont un point commun : ils relèvent de ce que les informaticiens appellent le "software", c'est-à-dire qu'ils ne reposent que sur des modifications du logiciel d'origine, par opposition à des procédés qui mettraient en jeu des dispositifs physiques ou qui reposeraient sur des modifications du matériel rentrant dans la composition du système informatique lui-même, le "hardware". Il suffit pour les déjouer soit d'utiliser des logiciels spécialisés, soit de "désassembler" le logiciel -le transcrire d'un langage machine dans un autre langage informatique, notamment l'assembleur-et retrouver les modifications apportées. La neutralisation ou la suppression de ces modifications -le "déplombage" du logiciel- sont souvent difficiles, mais elles restent plus accessibles aux "pirateurs" -utilisateurs ou copieurs de logiciels non autorisés- que ne le sont des interventions sur le matériel lui-même. Autrement dit, les "pirateurs" ont plus souvent des compétences relatives au "software" qu'au "hardware", et il leur est plus facile de "déplomber" un logiciel ou se procurer un code d'accès que de localiser et neutraliser une modification apportée au matériel lui-même.

Cependant, il existe également des procédés reposant sur une modification du matériel pour l'adapter à l'utilisation du logiciel, mais ils interdisent l'utilisation du logiciel sur des ordinateurs n'ayant pas subi cette modification, ce qui restreint inutilement l'utilisation du logiciel.

Enfin, d'autres procédés sont basés sur l'utilisation d'un accessoire physique à greffer sur le matériel avant utilisation d'un logiciel. Certains sont très simples, ce qui les rend faciles à reconstituer, tels les "straps"-pontages ou shunt- entre certaines des bornes périphériques de l'ordinateur, dont le logiciel demande à l'ordinateur de vérifier la présence. D'autres sont plus complexes et donc plus difficiles à contrefaire, surtout s'ils comprennent des circuits électroniques noyés dans de la résine, ou des composants électroniques dont on a effacé les références, ou encore des mémoires mortes programmées -PROM-, mais aucun n'est tout-à-fait transparent: soit ils empêchent l'utilisation de certaines des commandes de l'ordinateur soit ils bloquent certaines des bornes périphériques de l'ordinateur.

Le but de la présente invention est de proposer un procédé et dispositif de limitation de l'utilisation d'un logiciel pour un ordinateur qui permette à un utilisateur autorisé de faire autant de copies de sauvegarde qu'il souhaite, qui soit immédiatement transférable d'un ordinateur à un autre, et efficace, sûr, transparent et peu coûteux.

Selon la présente invention, un procédé de limitation de l'utilisation d'un logiciel par un ordinateur prévoit d'ajouter audit logiciel des instructions ayant pour effet de faire vérifier par l'ordinateur si un dispositif dit de limitation, comprenant un circuit électronique spécifique, est connecté à certaines des bornes de liaison dudit ordinateur avec une unité périphérique. Ladite unité périphérique est par exemple une imprimante, une table traçante, ou un modem. Avantageusement, ledit circuit électronique peut être mis dans deux états distincts depuis l'ordinateur chargé par ledit logiciel ainsi modifié, en fonction des signaux qu'il capte en provenance de l'ordinateur, un premier état dit de transparence dans lequel il n'intervient pas sur la liaison entre l'ordinateur et l'unité périphérique, et un deuxième état dit de vérification dans lequel ledit dispositif de limitation renvoie à l'ordinateur des signaux dits de retour en réponse à des signaux dits de vérification provenant dudit ordinateur, lesdits signaux de retour étant comparés par l'ordinateur à des signaux prédéterminés pour vérifier la présence dudit dispositif auxdites bornes de liaison.

Dans un mode de réalisation avantageux de la présente invention, ledit circuit électronique comporte un circuit diviseur jouant le rôle d'un compteur, notamment binaire, et lesdits signaux de vérification comprennent des impulsions d'horloge comptées par ledit circuit diviseur, certaines seulement des bornes de sortie dudit circuit diviseur étant connectées à une porte logique (OU,NON-OU) pour délivrer lesdits signaux de retour.

Selon la présente invention, un dispositif de limitation de l'exploitation d'un logiciel par un ordinateur destiné à être connecté à certaines des bornes périphériques de l'interface d'un ordinateur avec un appareil périphérique qu'il commande, ledit logiciel ne pouvant être exploité normalement que si ledit dispositif est connecté à ladite interface comprend un circuit diviseur jouant le rôle d'un compteur binaire destiné à compter des impulsions d'horloge en provenance dudit ordinateur, les connections dudit circuit diviseur avec ladite interface étant organisées comme suit:

- l'entrée dudit circuit diviseur est reliée à une des bornes de ladite interface;

- seules certaines des sorties dudit circuit diviseur sont connectées à une autre des bornes de ladite interface, par l'intermédiaire d'une première porte logique (OU, NON-OU);

- ledit circuit diviseur est alimenté en énergie par l'une des bornes de ladite interface.

Dans un mode de réalisation du dispositif de l'invention, si ladite interface est du type parallèle, la borne de remise à zéro dudit circuit diviseur est connectée à la borne normalisée numéro 1 de commande de l'ordinateur, dite borne "STROBE", par l'intermédiaire d'une deuxième porte logique, un signal comportant un front descendant, généré par l'ordinateur pour envoyer des données à l'unité périphérique, et arrivant sur la borne STROBE, mettant ainsi ledit dispositif dans un état dit de transparence.

D'autres caractéristiques et avantages de la présente invention apparaîtront mieux à la lecture de la description suivante donnée à titre d'exemples non limtatifs des formes possibles de réalisation de l'invention, en regard des dessins ci-joints et qui fera bien comprendre comment l'invention peut être réalisée.

Sur les dessins:

- les figures 1a et 1b sont des schémas de montage représentant des modes de connection possibles de dispositifs selon l'invention;

- la figure 2 est un schéma de principe du câblage d'un dispositif selon l'invention;

- la figure 3 est un schéma de principe du circuit électronique faisant partie du dispositif de la figure 2.

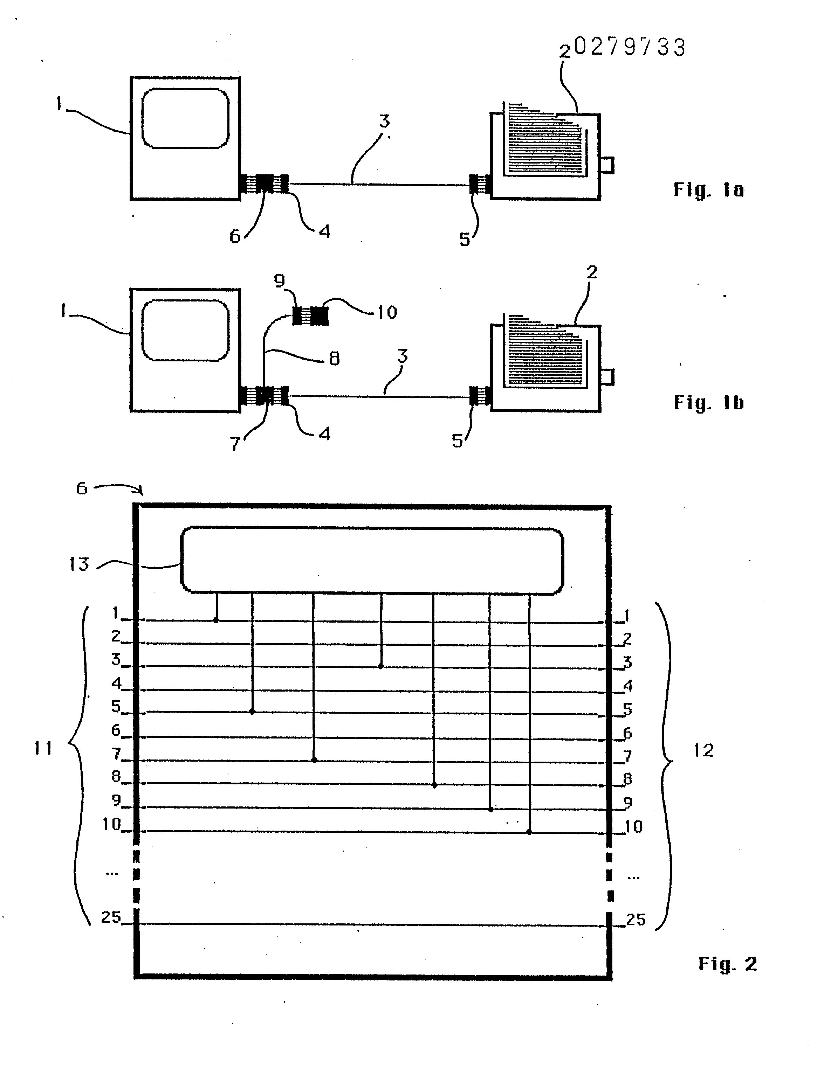

Sur les figures 1a et 1b, un ordinateur 1 est connecté à une imprimante 2 au moyen d'un cordon de liaison 3 muni en chacune de ses extrémités de prises de connection 4, 5 à plusieurs bornes, enfichables respectivement sur l'ordinateur 1 et l'imprimante 2. Selon l'invention, des instructions sont ajoutées à un logiciel de façon à ce que l'exploitation de tout ou partie du logiciel soit subordonné à la présence, à certaines des bornes périphériques de l'ordinateur, d'un dispositif dit de limitation. Sur la figure 1a, ledit dispositif se présente sous la forme d'un boîtier 6 connecté globalement en série entre l'ordinateur et l'une des prises 4 du cordon de liaison 3, et abritant un circuit électronique spécifique qui sera décrit ci-après. Sur la figure 1b, le dispositif de limitation est scindé en deux parties : d'une part un boîtier de dérivation 7 prolongé par un câble 8 muni d'une prise de connection 9, d'autre part un boîtier terminal 10 sur lequel on peut enficher la prise 9, et abritant ledit circuit électronique spécifique. La variante de la figure 1b permet d'installer et retirer le dispositif de limitation sans débrancher l'imprimante. Les connections internes du boîtier 10 sont telles que celui-ci pourrait être branché directement sur l'ordinateur en l'absence de l'imprimante.

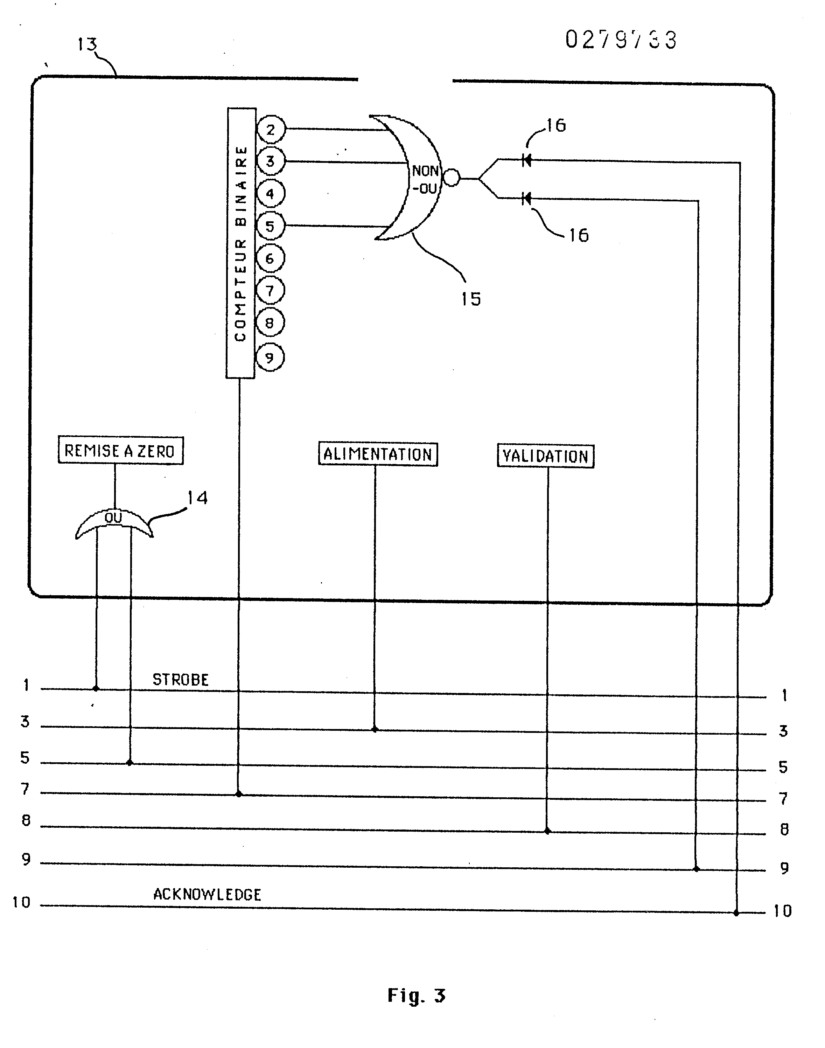

La figure 2 représente schématiquement l'intérieur du dispositif 6 de la figure 1a selon l'invention. Nous sommes dans le cas d'une interface normalisée de type parallèle entre l'ordinateur et l'imprimante. Cette interface comporte vingt-cinq bornes ayant des attributions normalisées, qui seront décrites ci-après en référence à la figure 3. Pour conserver les liaisons entre l'ordinateur et l'imprimante, le boîtier comporte vingt-cinq bornes d'entrée 11 reliées directement et respectivement à ses vingt-cinq bornes de sortie 12. Sur l'exemple de la figure 2, les bornes numéros 1,3,5,7,8,9, et 10 sont reliées aux bornes d'un circuit électronique spécifique 13.

Sur le schéma de fonctionnement de la figure 3, on a représenté celles des liaisons entre les bornes d'entrée et de sortie du boîtier 6 qui étaient reliées au circuit électronique 13. Le circuit électronique 13 a pour composant principal un circuit diviseur jouant le rôle d'un compteur binaire, connu en soi. Sur l'exemple de la figure 3, les bornes normalisées numéros 1 et 5 de l'interface de type parallèle sont reliées à la borne de remise à zéro du compteur par l'intermédiaire d'une porte OU 14, dite ici deuxième porte, la borne normalisée numéro 7 est reliée à l'entrée du compteur proprement dit et les bornes numéro 3 et 8 sont respectivement reliées aux bornes d'alimentation et de validation du circuit électronique. Certaines des bornes de sortie du compteur binaire, ici les bornes correspondant aux nombres d'impulsions deux, trois et cinq sont reliées par l'intermédiaire d'une porte NON-OU 15, dite ici première porte, aux bornes normalisées numéros 9 et 10 du boîtier. Les bornes numéros 9 et 10 sont toutefois isolées l'une de l'autre par deux diodes 16. Rappelons que les numéros des bornes du boîtier 6 correspondent aux numéros des conducteurs d'une interface normalisée de type parallèle entre l'ordinateur et l'imprimante, telle qu'utilisée par exemple par le fabricant IBM.

Sur une interface normalisée de type parallèle telle que décrite ci-dessus, les numéros des vingt-cinq bornes correspondent aux attributions suivantes:

- la borne no 1, appelée "STROBE" par l'homme de l'art, conduit un signal qui prévient l'unité périphérique, ici l'imprimante 2, que l'on s'adresse à elle et que des instructions vont lui parvenir : toute commande provenant de l'ordinateur et adressée à l'imprimante est précédée d'un signal prédéterminé, en l'occurence un front descendant sur le STROBE;

- les bornes no 2 à 9 sont des bornes dites de données, appelées souvent bornes "DATA" par l'homme de l'art. C'est d'elles que partent les données à destination de l'imprimante, telles qu'un texte à imprimer par exemple;

- les bornes no 10 à 17 sont des bornes dites de service, par lesquelles passent des commandes prédéterminées entre l'ordinateur et l'imprimante. La borne no 10 a une fonction particulière : c'est la borne dite d'accusé de réception, appelée "ACKNOWLEDGE" par l'homme de l'art ; l'ordinateur peut y lire des informations, pour savoir par exemple si l'imprimante a bien reçu les données ou les instructions qu'il lui a envoyées;

- les bornes no 18 à 25 sont reliées à la masse.

Le fonctionnement du dispositif de l'exemple de la figure 3 va maintenant être décrit. Les instructions supplémentaires ajoutées audit logiciel ont pour effet d'envoyer un signal de remise à zéro du compteur à la borne numéro 5, une tension d'alimentation à la borne numéro 3, et un signal de validation à la borne numéro 8. Le dispositif est alors mis dans l'état dit de vérification. L'ordinateur envoie ensuite un signal de vérification comprenant des impulsions d'horloge, qui sont comptées par le circuit diviseur. Sur l'exemple de la figure 3, les bornes de sortie numéros 2, 3 et 5 du compteur sont connectées physiquement à la porte NON-OU 15.

Dans cet exemple, les signaux de retour consistent en un niveau élevé pendant deux impulsions de l'horloge, à cause de la connection des sorties 2 et 3, suivi d'un niveau bas pendant une unité de temps, puisque la sortie 3 n'est pas connectée, suivi lui-même d'un niveau élevé pendant une impulsion d'horloge, à cause de la connection de la sortie 5, mais pas des suivantes.

Le dispositif renvoie ces signaux de retour aux bornes numéros 9 (DATA n°9) et 10 (ACKNOW-LEDGE) du dispositif et donc aux bornes correspondantes de l'ordinateur. Si l'ordinateur reçoit les signaux de retour qu'il attendait, le logiciel ainsi modifié "accepte" de continuer d'être exploité. Sinon, l'exploitation du logiciel est soit impossible, soit limitée à certaines parties, par exemple pour une démonstration dudit logiciel. Un autre choix concernant les bornes numéros 3, 5, 7 et 8 aurait pu être fait.

Par ailleurs, la borne numéro 9 aurait pu être remplacée par une autre borne de service, par exemple les bornes normalisées numéros 11, 12, 13 ou 15.

Un dispositif de ce type est donc associé d'une part aux bornes normalisées d'interface de son entrée, ici la borne numéro 7 pour le compteur, mais aussi les bornes numéros 5, 3 et 8, respectivement pour la remise à zéro, l'alimentation et la validation, et d'autre part aux sorties du circuit diviseur choisies pour le signal de retour.

On a vu que le circuit diviseur jouait le rôle d'un compteur. Il faut cependant remarquer qu'il ne s'agit pas ici d'un "compteur programmable", pour reprendre la terminologie de l'art. En effet mise à part sa remise à zéro, la seule "programmation" dont le dispositif fasse l'objet se ramène au choix des bornes et sorties connectées physiquement. Un exemple de circuit électronique utilisable pour mettre en oeuvre l'invention est celui commercialisé sous la référence CD4017A par RCA.

On remarquera que ce procédé et dispositif a un avantage qui n'avait pas été mentionné jusqu'ici. En effet, il est ainsi possible d'empiler des dispositifs d'une même famille correspondant à des logiciels différents possédant chacun leur propre dispositif ou clé. On entend par dispositifs de la même famille des dispositifs dont les circuits électroniques spécifiques sont connectés sur les mêmes bornes normalisées de l'interface de type parallèle. Des clés de la même famille peuvent être empilées car cet empilement revient à mettre des portes NON-OU en parallèle. Il est ainsi possible d'utiliser simultanément plusieurs logiciels dont l'exploitation est soumise à la présence de dispositifs ou clés de limitation.

Lorsque l'ordinateur désire s'adresser à l'imprimante, il commence toujours par envoyer un signal en front descendant sur la borne normalisée numéro 1, STROBE, ce qui a pour effet de désactiver le circuit électronique. En effet, selon les protocoles en vigueur, notamment le protocole CENTRONICS, un front descendant sur la borne STROBE force l'imprimante à lire les signaux en présence sur les bornes DATA 2 à 9, et seulement dans ce cas. Le dispositif ou clé est alors réinitialisé et mis dans l'état dit de transparence, et n'intervient plus sur la liaison entre l'ordinateur et l'imprimante. C'est dans ce but que la borne normalisée numéro 1, STROBE, est connectée à la borne de remise à zéro (par l'intermédiaire de la porte OU 14, sur laquelle arrive également la liaison avec la borne n°5, comme déjà décrit ci-dessus).

Dans une variante de ce mode de réalisation de l'invention, on aurait pu également utiliser la borne normalisée numéro 12 "PAPER-END" à la place de la borne n°10 "ACKNOWLEDGE".

L'interface entre l'ordinateur et l'imprimante étant normalisée, il est possible d'utiliser le logiciel ainsi modifié pour limiter son exploitation sur d'autres ordinateurs possédant ce type d'interface. Il suffit pour cela de se munir de la disquette sur laquelle est enregistré le logiciel et de la clé correspondante nécessaire à son exploitation.

Il est inutile de protéger le logiciel contre la copie puisqu'il faut être en possession de la clé pour l'utiliser. On peut donc faire autant de copies de sauvegarde du logiciel qu'on le souhaite. On peut même prêter un exemplaire du logiciel à des fins de démonstration sans craindre qu'il soit copié pour être exploité.

La limitation de l'exploitation du logiciel est de plus progammable avant la compilation du logiciel, ce qui permet à l'utilisateur de mettre au point son propre programme d'utilisation de la clé. Ce programme peut même être développé non seulement en langage machine, mais aussi en tout autre langage tel que le Basic, le C, etc... dans divers systèmes d'exploitation (MS-DOS, XENIX, PROLOGUE, etc...).

Deux niveaux de numéros distinctifs peuvent être associés à un dispositif ou clé selon l'invention :

- un premier numéro distinctif correspondant à ladite famille, composé à partir des numéros des bornes normalisées de l'interface, qui eux-mêmes sont arrangés dans un certain ordre;

- un deuxième numéro distinctif correspondant au câblage interne dudit circuit électronique spécifique, c'est-à-dire composé à partir des numéros des bornes de sortie du compteur binaire.

Le premier numéro distinctif peut être associé à un concepteur de logiciel, et le deuxième numéro distinctif peut être associé à un logiciel commercialisé par ce concepteur. Les logiciels d'un même concepteur pourront ainsi être utilisés simultanément sur le même ordinateur, comme cela a été expliqué ci-dessus.

Bien qu'elle ait été décrite en détail dans le cas d'une interface de type parallèle, l'invention est également applicable à une interface de type série. Dans le cas des interfaces de type série équipant les micro-ordinateurs, le principe est identique. La masse est prise sur la borne normalisée numéro 2 (TD : "Transmitted Data"), et la borne normalisée numéro 4 (RTS : "Request To Send") permet, par un passage temporisé à 1, d'une part la remise à zéro du compteur et sa validation, d'autre part la charge d'une capacité qui alimente le circuit pendant son fonctionnement. Le comptage s'effectue par la borne normalisée numéro 20 (DTR : "Data Terminal Ready"). La lecture du compteur peut se faire sur les bornes normalisées numéros 5 (CTS : "Clear To Send"), 6 (DSR : "Data Set Ready"), 8 (RLSD : "Received Line Signal Detector") ou 22 (RI : Ring Indicator") suivant le type d'accessoire périphérique utilisé en série avec la clé. Généralement, au moins une de ces trois bornes est inutilisée.

Le fonctionnement d'un dispositif selon l'invention applicable à une interface de type série est semblable à celui, décrit en exemple, applicable à une interface de type parallèle, mais il ne permet pas de faire varier les bornes utilisées en entrée du dispositif (numéros 2, 4 ou 20) mais seulement les bornes de sortie (numéros 6, 8, ou 22). Le choix de la borne de sortie est limité à celle non utilisée par l'unité périphérique branchée en série avec le dispositif -ou "clé"- pour assurer sa transparence.

## Revendications

1. Dispositif (6, 10) de limitation de l'exploitation d'un logiciel par un ordinateur (1) destiné à être connecté à certaines des bornes périphériques de l'interface (11, 12) d'un ordinateur avec un appareil périphérique (2) qu'il commande, ledit logiciel ne pouvant être exploité normalement que si ledit dispositif est connecté à ladite interface, caractérisé en ce que ledit dispositif comprend un circuit diviseur jouant le rôle d'un compteur binaire destiné à compter des impulsions d'horloge en provenance dudit ordinateur, et en ce que les connections dudit circuit diviseur avec ladite interface (11, 12) sont organisées comme suit :

- l'entrée dudit circuit diviseur est reliée à une des bornes de ladite interface ;

- seules certaines des sorties dudit circuit diviseur sont connectées à une autre des bornes de ladite interface, par l'intermédiaire d'une première porte logique (15);

- ledit circuit diviseur est alimenté en énergie par l'une des bornes de ladite interface.

2. Dispositif de limitation de l'exploitation d'un logiciel pour ordinateur selon la revendication 1, caractérisé en ce que ladite interface est du type parallèle et en ce que la borne de remise à zéro dudit circuit diviseur est connectée à la borne normalisée numéro 1 de commande de l'ordinateur, dite borne "STROBE", par l'intermédiaire d'une deuxième porte logique (14), un signal comportant un front descendant, généré par l'ordinateur pour envoyer des données à l'unité périphérique, et arrivant sur la borne STROBE, mettant ainsi ledit dispositif (6, 10) dans un état dit de transparence.

3. Dispositif selon la revendication 2, caractérisé en ce que la sortie de ladite première porte logique (15) est connectée à au moins une desdites bornes périphériques de l'interface de type parallèle, choisie dans le groupe constitué par les bornes dites des signaux de service, de numéros normalisés 10 -dite d'accusé de réception, "ACKNOWLEDGE"-, 11, 12 -dite "PAPER-END"-, 13 et 15.

4. Dispositif selon la revendication 3, caractérisé en ce que les autres desdites bornes périphériques sont choisies parmi les bornes normalisées numéros 2 à 9 dites de données de l'interface de type parallèle, appelées DATA par l'homme de l'art, l'une d'elles étant reliée à l'entrée de ladite deuxième porte logique (14) pour la remise à zéro commandée dudit dispositif.

5. Dispositif selon l'une des revendications 2 à 4 caractérisé en ce que ladite première porte logique (15) est choisie dans le groupe formé par les portes OU et NON-OU, et en ce que ladite deuxième porte (14) est une porte OU.

6. Dispositif de limitation de l'exploitation d'un logiciel donné pour un ordinateur (1), ledit dispositif (6, 10) comprenant un circuit électronique (13) qui se connecte sur certaines des bornes périphériques d'une interface normalisée de type série dudit ordinateur, caractérisé en ce que ledit circuit électronique (13) comporte un circuit diviseur jouant le rôle d'un compteur binaire dont l'entrée est reliée à une desdites bornes périphériques, la borne de remise à zéro dudit circuit diviseur étant reliée à la borne normalisée numéro 4 (RTS) de ladite interface de type série, l'entrée dudit circuit diviseur étant reliée à la borne normalisée numéro 20 (DTR), et certaines des bornes de sortie dudit circuit diviseur étant connectées par l'intermédiaire d'une porte NON-OU à au moins une des bornes normalisées numéros 5 (CTS), 6 (DSR), 8 (RLSD) ou 22 (RI), de ladite interface de type série.

7. Dispositif selon les revendications 1 à 6 caractérisé en ce qu'il se présente sous la forme d'un boîtier (6, 10) muni de bornes d'entrée et/ou de sortie (11, 12) enfichables sur une prise de connection normalisée pour ladite interface.

9. Procédé de limitation de l'exploitation d'un logiciel pour ordinateur utilisant un dispositif selon l'une des revendications 1 à 5, caractérisé en ce qu'il comprend l'étape d'ajouter audit logiciel des instructions ayant pour effet de faire vérifier par l'ordinateur si ledit dispositif de limitation (6, 10) est présent aux bornes d'interface de l'ordinateur avant que le logiciel puisse continuer d'être exploité normalement, le choix et l'affectation des bornes de ladite interface vis-à-vis dudit dispositif de limitation déterminant un arrangement des numéros d'ordre normalisés desdites bornes formant ensemble un premier numéro distinctif, et les sorties dudit circuit diviseur connectées à la sortie dudit dispositif par l'intermédiaire de ladite première porte logique (15) déterminant un deuxième numéro distinctif.

20279733

Fig. 1a

Fig. 1b

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 562 306  (CHOU et al.)<br>* Colonne 2, lignes 9-21,40-53; colonne 3, lignes 30-54; colonne 4, ligne 29 - colonne 5, ligne 20; colonne 6, lignes 8-16,57-61; colonne 7, lignes 4-12; colonne 8, lignes 12-20,25-31; figures 2-4 * | 1,6 | G 06 F    1/00 |
| A | --- | 2,5,7,8 | |
| Y | EP-A-0 183 608  (SCHLUMBERGER TECHNOLOGY)<br>* Page 3, ligne 1 - page 4, ligne 6; page 4, ligne 22 - page 5, ligne 8; page 5, lignes 16-25; page 5, lignes 31-34; page 6, lignes 26-33; page 7, ligne 20 - page 8, ligne 2; page 8, lignes 25-29; page 9, lignes 17-34; page 10, lignes 1-10 * | 1,6 | |
| A | --- | 2-5,7,8 | |
| Y | EP-A-0 084 441  (TABS LTD)<br>* Page 2, lignes 18-21; page 3, ligne 10 - page 4, ligne 12; page 4, lignes 19-25; page 7, lignes 16-24; page 8, lignes 2-5 * | 6 | **DOMAINES TECHNIQUES RECHERCHES (Int. Cl.4)**<br><br>G 06 F    1/00 |
| A | --- | 1-3,7,8 | |
| A | PATENT ABSTRACTS OF JAPAN, vol. 8, no. 259 (P-317)[1696], 28 novembre 1984; & JP-A-59 128 639 (FUJI DENKI SEIZO K.K.) 24-07-1984<br>* Résumé * | 2 | |

--- -/-

Le présent rapport a été établi pour toutes les revendications

| Lieu de la recherche | Date d'achèvement de la recherche | Examinateur |
|---|---|---|
| LA HAYE | 27-05-1988 | MOENS R.A.A. |

EPO FORM 1503 03.82 (P0402)

**Office européen des brevets**

# RAPPORT DE RECHERCHE EUROPEENNE

Numero de la demande

EP 88 40 0272

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | ELEKTOR ELECTRONICS, vol. 12, no. 134, octobre 1984, pages 10-58 – 10-63, Barnet, GB; "RS232/Centronics converter" * Figures 1a,6a,6b * ----- | 2,3,6 | |
| | | | DOMAINES TECHNIQUES RECHERCHES (Int. Cl.4) |

Le présent rapport a été établi pour toutes les revendications

| Lieu de la recherche | Date d'achèvement de la recherche | Examinateur |
|---|---|---|
| LA HAYE | 27-05-1988 | MOENS R.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P0402)